# EUROPEAN PATENT SPECIFICATION

(11) **EP 0 627 857 B1**
(45) Date of publication and mention of the grant of the patent: **03.03.1999**
(21) Application number: 94107978.2
(22) Date of filing: 25.05.1994
(51) Int. Cl.: H04N 7/087, H04N 5/76, H04N 5/782

(54) **Method for programming a recording device and programming device**
Verfahren zur Programmierung eines Aufzeichnungsgeräts und Programmiergerät
Méthode de programmation d'un dispositif d'enregistrement et dispositif de programmation

(30) Priority: 03.06.1993 EP 93401430
(43) Date of publication of application: 07.12.1994
(73) Proprietor: THOMSON multimedia, 92648 Boulogne Cédex (FR)
(72) Inventor: Diehl, Eric, F-67100 Strasbourg (FR); Tazine, Nour-Eddine, F-67115 Plobsheim (FR)
(74) Representative: Wördemann, Hermes, Dipl.-Ing.

(56) References cited:
- EP-A- 0 424 725
- WO-A-90/00847
- WO-A-90/03706
- WO-A-91/08626
- NEUES AUS DER TECHNIK, no.3, 20 September 1990, WURZBURG DE page 464, XP121491 'Einfache Programmierung eines Videorecorders'
- EUROPEAN BROADCASTING UNION,, August 1990, GENEVA, CH, 'Specification of the domestic video programme delivery control system (PDC)'
- IEEE TRANSACTIONS ON CONSUMER ELECTRONICS, vol.CE-32, no.3, August 1986, NEW YORK US pages 162 - 168 MEINDL ET AL. 'Decoder IC for an automatic video program identification system (VPS)'

## Description

The present invention relates to a method for programming a recording device and to a programming device.

### Background

Programming a VCR to record a program which will be broadcast later, so called Time Shift Recording, has always been one of the most difficult tasks to be performed by a user. Different User Interface techniques have been employed in the past which are not perfect. Some interesting techniques simplifying the entry method, such has VPS marking or VIDEO+, seem to help greatly the user. But none of these approaches takes into account the user's way of thinking.

From the document "Specification of the domestic video Programme Delivery Control system (PDC)", European Broadcasting Union, August 1990 it is known to programme a video recorder by selecting a programme from the teletext programme guide pages of a TV programme. A detailed description of the preselection function for recording control and the recording control function itself is given.

### Invention

It is one object of the invention to disclose a method of programming a recording device which offers a very easy and natural way to perform the normally complicated programming task. This object is reached by the method disclosed in claim 1.

It is a further object of the invention to disclose a programming unit which utilises the inventive method. This object is reached by the apparatus disclosed in claim 10.

A recent study of usage of home devices has enlightened the fact, that some users would like to be able to program their VCR by impulse choice when viewing advertisements for a show they would like to record.

The present invention proposes a way to realise such impulse programming for time shift recording. Program related data contained in the broadcast signal are evaluated and compared with the current TV set tuning when a LEARN button on a remote control is pressed. The VCR tunes to the present TV channel and stores the interesting program data. The invention proposes also some features ensuring the user that his recorded program will start and end at the right time and skip out every advertisements which will be broadcast during the recorded program.

In principle the inventive method consists in programming a recording device, whereby data which are related to the status and to the time and to the date and to the identity and to the channel or frequency of the broadcast of a desired program are transmitted accompanying to a present program, and wherein:
- normally all of said data describe said present program;
- if in a short time - especially in a few minutes - a new program will be broadcast on the current channel or frequency, said status data are set to a wait status and the other of said data describe said new program;
- if there is broadcast in the present program an advertisement for a future program to be broadcast on this channel/frequency or on another one, said status data are set to an information status and the other of said data describe said advertised future program, and wherein, when a user indicates that he wants to record said desired new or future program, said data are extracted from said present program and are stored and used to automatically program said recording device, wherein
before - especially a few minutes before - the start time of the broadcast of said desired program at said date said recording device is tuned to the respective channel or frequency, if necessary, and said recording device waits until said status changes from said wait status to a broadcast status and then starts recording, if said identity data match the respective stored identity data. Advantageous additional embodiments of the inventive method are resulting from the respective dependent claims.

In principle the inventive programming unit for programming a recording device comprises:
- a data extractor which extracts from a present video and/or audio signal data, which are related to the status and to the time and to the date and to the identity and to the channel or frequency of the broadcast of a desired program, wherein:
   a) normally all of said data describe said present program;
   b) if in a short time - especially few minutes - a new program will be broadcast on the current channel or frequency, said status data are set to a wait status and the other of said data describe said new program;
   c) if there is broadcast in the present program an advertisement for a future program to be broadcast on this channel/frequency or on another one, said status data are set to an information status and the other of said data describe said advertised future program;
- memory means which can store at least a part of said data;
- a central processing unit which is connected to said memory means and to said data extractor and evaluates said data and controls a recording device including a tuner, whereby the recording is allowed when said status changes from said wait status to a broadcast status and if said identity data match respective identity data previously stored in said memory means;
- an infra red receiver which is connected to said central processing unit and which receives and decodes a user's program command from an infra red remote control thereby initiating the operation of said central processing unit.

### Drawings

Preferred embodiments of the invention are described with reference to the accompanying drawings, which show in:
- Fig. 1: shows a possible set of hardware for executing the inventive method;
- Fig. 2: block diagram of circuits in a VCR which carry out the invention.

### Preferred embodiments

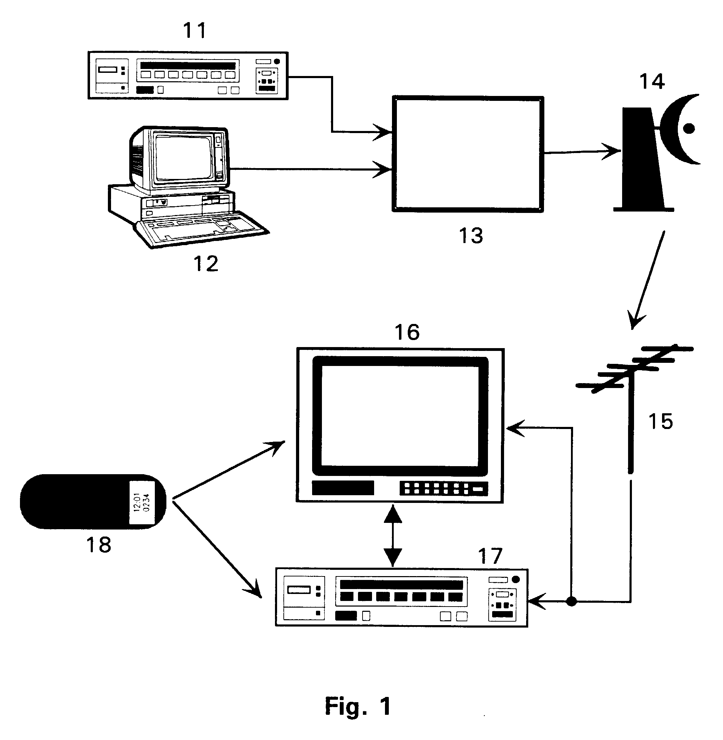

Fig. 1 illustrates a possible hardware implementation of the invention. This figure represents two sides of the system. One side is the broadcast studio. This side is composed of some video sources 11, here materialised by a VCR, and a computer 12 which drives the video sources 11. The video signal provided by video source 11 is input to a device 13 called Data Inserter. The Data Inserter receives some digital information from computer 12 and inserts respective program related data into the video signal. Different techniques can be used. For instance, the data can be inserted into the Vertical Blanking Interval (VBI) lines as in teletext systems. Including the data inserted, the video signal is transmitted over the air by a transmitter 14. The output signal may take any transmission path as satellite link, cable network or terrestrial diffusion.
The second side represents the required equipment in the user's home. The TV signal passes through an antenna 15 to both, a TV set 16 and a VCR 17. The latter devices are able to exchange information, for instance by using a domestic bus. One unique remote controller 18 drives both, VCR and TV set.

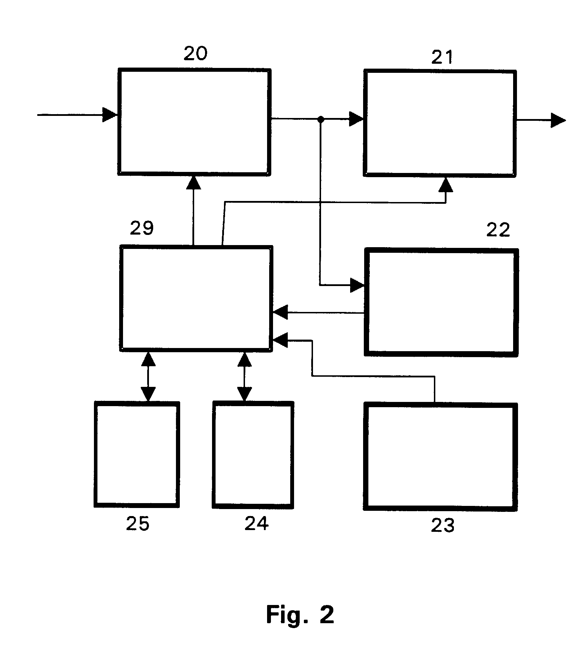

In Fig. 2 the video signal received via antenna 15 is fed to a tuner 20. This tuner provides a demodulated video signal to known video processing elements 21 (e.g. a mechadeck) of the VCR and to a Data Extractor 22. The purpose of this Data Extractor is to retrieve the digital information having been inserted previously in the video signal by Data Inserter 13. This information is delivered to a Central Processing Unit (CPU) 29 which typically is a micro controller. CPU 29 indicates to tuner 20 which channel to tune. It also drives the video processing elements 21. The CPU is able to communicate with TV set 16 through an interface bus 24. The remote controller 18 sends Infra Red information to the TV set and to the VCR which receives this information by an IR Receiver 23 and sends the respective evaluated information to CPU 29.

### Data Stream

The following data are contained in the video signal (which e.g. have been inserted by Data Inserter 13):

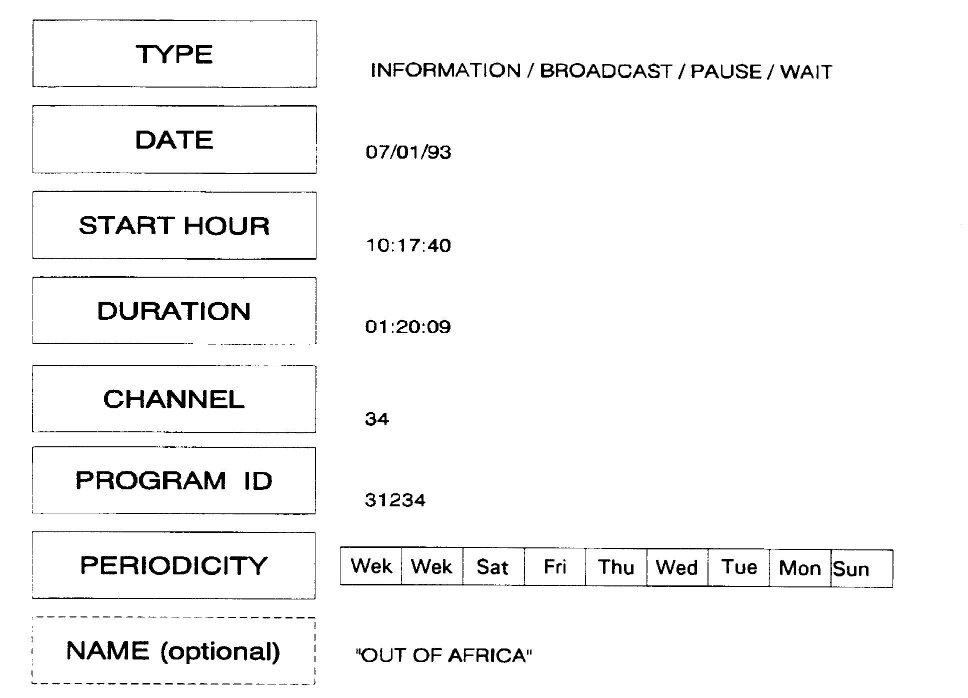

The first data field TYPE can have four different values: INFORMATION, BROADCAST, PAUSE, WAIT. The role of this field will be explained later.
The other data fields DATE, START TIME, DURATION, CHANNEL, PROGRAM ID, PERIODICITY and the optional field NAME describe a broadcasted program entirely.
The data field PERIODICITY comprises flags. If such a flag is set it defines the daily frequency of the program. For instance if both, WED and MON flags are set the program will be broadcast every Monday and Wednesday. If no flag is set the program will be broadcast only once at the date which is defined by data field DATE. The two week flags WEK define a weekly periodicity: 00 - every week; 01 - every fortnight; 10 - every three weeks; 11 - every month.

CPU 29 manages completely these data. It faces four situations:
a) The channel is currently broadcasting the program itself. In that case, the data field TYPE is set to BROADCAST and the other data fields describe the currently broadcast program.
b) The channel will broadcast in a few minutes a program. In that case, the data field TYPE is set to WAIT and the other data fields describe the coming broadcast program.
c) The channel is broadcasting some advertisement for a future program, to be broadcast on this channel or on another one. In that case, the data field TYPE is set to INFORMATION and the other data fields describe the advertised program.
d) The channel is broadcasting some advertisements during the present program which are not related to a future program. In that case, the data field TYPE is set to PAUSE and the other data fields describe the temporarily interrupted program.

The invention works then in the following way:
Remote Controller 18 is equipped with a dedicated button called LEARN button.

### Programming the VCR:

When the user watches on his TV set an advertisement for a program he would like to record, he simply pushes the LEARN button while seeing the advertisement. The Remote Controller 18 sends the corresponding command to the VCR. CPU 29 interrogates TV set 16 to check on which program it is tuned. Then CPU 29 requests tuner 20 to tune on the same channel as TV set 16. The Data Extractor 22 retrieves the respective program information and transfers it to the CPU. Then the VCR programs itself using the received data.
Advantageously a check is performed previously in order to verify that data field TYPE is equal to INFORMATION, else the learning operation is discarded. Advantageously, a Data Extractor can be implemented in the TV set, also. In that case, the VCR would receive the program information directly from the TV set. This solution has the advantage that the user can 'learn' a program even while the VCR is recording.

### VCR record policy:

After having been programmed accordingly the VCR will tune on the channel defined by data field CHANNEL a short time (e.g. few minutes) before the time defined by fields DATE, START TIME and PERIODICITY. It waits then until data field TYPE is set to BROADCAST. It verifies that the PROGRAM ID data match to the respective PROGRAM ID data previously stored in a memory 25 and then starts recording.
The recording is momentarily paused when data field TYPE changes its state. The recording resumes under the condition that TYPE is reset to BROADCAST and the PROGRAM ID data are matching. If TYPE is set to BROADCAST and the PROGRAM ID data do not match any more, the record is stopped definitely.

The interruption of the record policy can also be employed if the Time Shift Recording was programmed in a traditional way rather than in the way described above. But in that case, the check of the PROGRAM ID data is not performed and the start and stop times are defined by the user himself. But the VCR will not record the part of a program marked PAUSE, WAIT and INFORMATION.

The data extractor 22 may be located in the TV set. In this case the program information is transmitted via the digital bus to the VCR.

The data field NAME can be used to display the title of the recording on the VCR and/or on the TV set and/or on the remote control and/or to store this title on the recording medium.

Currently, home bus systems linking together a TV set and a VCR are not widely available. The following extension proposes a modification of the previous architecture in order to use a standard TV set which has no digital bus connection. Remote control 18 still drives both, TV set and VCR. In the VCR are stored the frequencies/channels which are assigned to the internal program storage numbers of the TV set. The remote control will memorise the last program storage number called on the TV set. After the LEARN button has been pressed the remote control transfers to VCR 17 this command and an additional information indicating on which program the TV set is tuned. The VCR then tunes to the assigned frequency/channel and does not need to interrogate the TV set. The link TV/VCR performed through the digital bus is not any more mandatory.

In the previous description the data describing the broadcast program are physically attached to the broadcast channel. Another solution is to provide one specific data channel, a so called Barker channel, which is dedicated to the description of the on-going programmes. Each program provider would deliver the data to one central authority which would concatenate them into a common data stream broadcast on a specific frequency.

The Barker channel uses its complete bandwidth to carry the data. The data description proposed above is still valid. Some changing in the order of the parameters presentation could be made such as starting with the CHANNEL parameter.
The VCR, rather than tuning to the current TV set channel, will tune to the Barker channel. Then it waits for the data of the watched channel to occur.
This solution has a main advantage that there is one unique data insertion system for all the channels which reduces the investment.

Advantageously, the VCR can be programmed also in the standard way, but the invention proposes an easier way to perform this task.

The invention can also be used in case a radio and an Audio recording device (compact cassette recorder, DCC, Minidisc, DAB recorder, MOD) are used together, e.g. when receiving FM-RDS or DAB or digital satellite audio broadcasts.

## Claims

1. Method for programming a recording device (17), **wherein** data, which are related to the status (TYPE) and to the time (START TIME, DURATION) and to the date (DATE) and to the identity (PROGRAM ID) and to the channel or frequency (CHANNEL) of the broadcast of a desired program, are transmitted (14) accompanying a present program, wherein:
- normally all of said data (TYPE, START TIME, DURATION, DATE, PROGRAM ID, CHANNEL) describe said present program;
- if in a short time - especially in a few minutes - a new program will be broadcast on the current channel or frequency, said status data (TYPE) are set to a wait status (WAIT) and the other of said data (START TIME, DURATION, DATE, PROGRAM ID, CHANNEL) describe said new program;
- if there is is broadcast in the present program an advertisement for a future program to be broadcast on this channel/frequency or on another one, said status data (TYPE) are set to an information status (INFORMATION) and the other of said data (START TIME, DURATION, DATE, PROGRAM ID, CHANNEL) describe said advertised future program,
and wherein, when a user indicates that he wants to record said desired new or future program, said data (TYPE, START TIME, DURATION, DATE, PROGRAM ID, CHANNEL) are extracted (22) from said present program and are stored (25) and used to automatically program said recording device, wherein before - especially a few minutes before - the start time of the broadcast of said desired program at said date said recording device is tuned to the respective channel or frequency, if necessary, and said recording device waits until said status changes from said wait status (WAIT) to a broadcast status (BROADCAST) and then starts recording, if said identity data (PROGRAM ID) match the respective stored identity data.

2. Method according to claim 1, **wherein** in case that during said present program some advertisements are broadcast which are not related to a desired program, said status data (TYPE) are set to a pause status (PAUSE) and the other of said data (START TIME, DURATION, DATE, PROGRAM ID, CHANNEL) describe the temporarily interrupted present program, wherein the recording (17) is interrupted until said status data (TYPE) are set to said broadcast status (BROADCAST).

3. Method according to claim 1 or 2, **wherein** said user indicates the record command by pressing a related button on a remote control (18) which controls both, the device (16) which receives the current program and the recording device (17).

4. Method according to claim 3, **wherein** a data extractor (22) for extracting all of said data (TYPE, START TIME, DURATION, DATE, PROGRAM ID, CHANNEL) is located in said recording device (17) and said receiving device (16) and said recording device are connected by a digital bus on which the received signal which comprises all of said data is transferred to and evaluated (29) in said recording device.

5. Method according to claim 3, **wherein** a data extractor (22) for extracting all of said data (TYPE, START TIME, DURATION, DATE, PROGRAM ID, CHANNEL) is located in said receiving device (16) and said receiving device and said recording device (17) are connected by a digital bus on which the extracted data are transferred to and evaluated (29) in said recording device.

6. Method according to claim 3, **wherein** said remote control (18) stores the currently selected internal program storage number in said receiving device (16) and a data extractor (22) for extracting all of said data (TYPE, START TIME, DURATION, DATE, PROGRAM ID, CHANNEL) is located in said recording device (17) and in this device the channels or frequencies corresponding to the preselected program storage numbers in said receiving device are stored and the infra red code comprising the currently selected program storage number is evaluated (23) in the recording device and used for tuning on this program in the recording device when the user presses said button on said remote control (18).

7. Method according to any of claims 1 to 6, **wherein** said data do also comprise periodicity data (PERIODICITY) which are used to program said recording device (17) with a respective sequence of desired programs.

8. Method according to any of claims 1 to 7, **wherein** said data do also comprise title data (NAME) which are used to display the title of the recording on said recording device (17) and/or on said receiving device (16) and/or on said remote control and/or to store these title data on the recording medium.

9. Method according to any of claims 1 to 8, **wherein** all of said data (TYPE, START TIME, DURATION, DATE, PROGRAM ID, CHANNEL) are broadcast on a separate Barker channel and, where appropriate, are extracted from this channel.

10. Programming unit for programming a recording device (17), comprising:
- a data extractor (22) which extracts from a present video and/or audio signal data, which are related to the status (TYPE) and to the time (START TIME, DURATION) and to the date (DATE) and to the identity (PROGRAM ID) and to the channel or frequency (CHANNEL) of the broadcast of a desired program, wherein:
- normally all of said data (TYPE, START TIME, DURATION, DATE, PROGRAM ID, CHANNEL) describe said present program;
- if in a short time - especially in a few minutes - a new program will be broadcast on the current channel or frequency, said status data (TYPE) are set to a wait status (WAIT) and the other of said data (START TIME, DURATION, DATE, PROGRAM ID, CHANNEL) describe said new program;
- if there is broadcast in the present program an advertisement for a future program to be broadcast on this channel/frequency or on another one, said status data (TYPE) are set to an information status (INFORMATION) and the other of said data (START TIME, DURATION, DATE, PROGRAM ID, CHANNEL) describe said advertised future program;
- memory means (25) which can store at least a part of said data;
- a central processing unit (29) which is connected to said memory means (25) and to said data extractor (22) and evaluates said data and controls a recording device (21) including a tuner (20), wherein the recording is allowed when said status changes from said wait status (WAIT) to a broadcast status (BROADCAST) and if said identity data (PROGRAM ID) match respective identity data previously stored in said memory means (25);
- an infra red receiver (23) which is connected to said central processing unit (29) and which receives and decodes a user's program command from an infra red remote control (18) thereby initiating the operation of said central processing unit.

## Patentansprüche

1. Verfahren zur Programmierung eines Aufzeichnungsgerätes (17),
bei dem Daten, die sich auf den Zustand (TYP) und auf die Zeit (STARTZEIT, DAUER) und das Datum (DATE) und die Identität (PROGRAMM ID) und auf den Kanal oder die Frequenz (KANAL) der Sendung eines gewünschten Programms beziehen, zusammen mit einem laufenden Programm übertragen werden (14), wobei:
- normalerweise alle diese Daten (TYP, STARTZEIT, DAUER, DATUM, PROGRAMM ID, KANAL) das gegenwärtige Programm beschreiben,
- wenn in einer kurzen Zeit - insbesondere in einigen Minuten - ein neues Programm auf dem laufenden Kanal oder der laufenden Frequenz gesendet werden wird, die Zustandsdaten (TYP) in einen Wartezustand (WARTEN) gesetzt werden und die anderen Daten (STARTZEIT, DAUER, DATUM, PROGRAMM ID, KANAL) das neue Programm beschreiben,
- wenn in dem gegenwärtigen Programm eine Werbung für ein künftiges Programm gesendet wird, das auf diesem Kanal/Frequenz oder einem anderen gesendet werden soll, die Zustandsdaten (TYP) auf einen Informationszustand (INFORMATIONEN) gesetzt werden und die anderen der Daten (STARZEIT, DAUER, DATUM, PROGRAMM ID, KANAL) das in der Werbung angebotene künftige Programm beschreiben,
und wobei dann, wenn der Benutzer anzeigt, daß er das gewünschte neue oder künftige Programm aufzeichnen möchte, die Daten (TYP, STARTZEIT, DAUER, DATUM, PROGRAMM ID, KANAL) aus dem gegenwärtigen Programm extrahiert (22) und gespeichert (25) und zur automatischen Programmierung des Aufzeichnungsgerätes benutzt werden, wobei vor - insbesondere einige Minuten vorher - der Startzeit der Sendung des gewünschten Programms an dem Datum das Aufzeichnungsgerät, sofern notwendig, auf den jeweiligen Kanal oder die jeweilige Frequenz abgestimmt wird, und das Aufzeichnungsgerät wartet, bis der Zustand sich von dem Wartezustand (WARTEN) zu einem Sendezustand (SENDEN) ändert und dann die Aufzeichnung beginnt, wenn die Identitätsdaten (PROGRAMM ID) mit den jeweils gespeicherten Identitätsdaten übereinstimmen.

2. Verfahren nach Anspruch 1, wobei in dem Fall, daß während des gegenwärtigen Programms irgendwelche Werbungen gesendet werden, die sich nicht auf ein gewünschtes Programm beziehen, die Zustandsdaten (TYP) auf einen Ruhezustand (PAUSE) versetzt werden und die anderen Daten (STARTZEIT, DAUER, DATUM, PROGRAMM ID, KANAL) das vorübergehend unterbrochene gegenwärtige Programm beschreiben, und wobei die Aufzeichnung (17) unterbrochen wird, bis die Zustandsdaten (TYP) auf den Sendezustand (SENDEN) gesetzt werden.

3. Verfahren nach Anspruch 1 oder 2, wobei der Benutzer den Aufzeichnungsbefehl durch Drücken eines betreffenden Knopfes auf einer Fernbedieneinheit (18) anzeigt, die sowohl das das laufende Programm empfangende Gerät (16) als auch das Aufzeichnungsgerät (17) steuert.

4. Verfahren nach Anspruch 3, wobei ein Daten-Extrahierer (22) zum Extrahieren aller Daten (TYP, STARTZEIT, DAUER, DATUM, PROGRAMM ID, KANAL) in dem Aufzeichnungsgerät (17) angeordnet ist und das Empfangsgerät (16) und das Aufzeichnungsgerät über einen digitalen Bus miteinander verbunden sind, über den das empfangene Signal, das alle Daten enthält, zu dem Aufzeichnungsgerät übertragen und darin ausgewertet wird (29).

5. Verfahren nach Anspruch 3, wobei ein Daten-Extrahierer (22) zum Extrahieren aller Daten (TYP, STARTZEIT, DAUER, DATUM, PROGRAMM ID, KANAL) in dem Empfangsgerät (16) angeordnet ist und das Empfangsgerät und das Aufzeichnungsgerät (17) über einen digitalen Bus miteinander verbunden sind, über den die extrahierten Daten zu dem Aufzeichnungsgerät übertragen und darin ausgewertet werden (29).

6. Verfahren nach Anspruch 3, wobei die Fernbedieneinheit (18) die laufende ausgewählte interne Programmspeichernummer in dem Empfangsgerät (16) speichert und ein Daten-Extrahierer (22) zum Extrahieren aller Daten (TYP, STARTZEIT, DAUER, DATUM, PROGRAMM ID, KANAL) in dem Aufzeichnungsgerät (17) angeordnet ist und in diesem Gerät die Kanäle oder Frequenzen, die den ausgewählten Programmspeichernummern in dem Empfangsgerät entsprechen, gespeichert werden, und der Infrarot-Kode, der die laufende ausgewählte Programmspeichernummer enthält, in dem Aufzeichnungsgerät ausgewertet wird (23) und zur Abstimmung auf dieses Programm in dem Aufzeichnungsgerät dient, wenn der Benutzer den Knopf auf der Fernbedieneinheit (18) drückt.

7. Verfahren nach einem der Ansprüche 1 bis 6, wobei die Daten außerdem Periodizitäts-Daten (PERIODIZITÄT) enthalten, die zur Programmierung des Aufzeichnungsgeräts (17) mit einer jeweiligen Folge von gewünschten Programmen dienen.

8. Verfahren nach einem der Ansprüche 1 bis 7, wobei die Daten außerdem Titeldaten (NAME) enthalten, die zur Wedergabe des Titels der Aufzeichnung auf dem Aufzeichnungsgerät (17) und/oder auf dem Empfangsgerät (16) und/oder auf der Fernbedieneinheit und/oder zum Speichern dieser Titeldaten auf dem Aufzeichnungsmedium dienen.

9. Verfahren nach einem der Ansprüche 1 bis 8, wobei alle Daten (TYP, STARTZEIT, DAUER, DATUM, PROGRAMM ID, KANAL) auf einem getrennten Barker-Kanal gesendet werden und, sofern zweckmäßig, aus diesem Kanal extrahiert werden.

10. Programmiereinheit zum Programmieren eines Aufzeichnungsgeräts (17), enthaltend:
- einen Daten-Extrahierer (22), der Daten aus einem vorliegenden Video- und/oder Audiosignal extrahiert, die sich auf den Zustand (TYP) und auf die Zeit (STARTZEIT, DAUER) und auf das Datum (DATE) und auf die Identität (PROGRAMM ID) und auf den Kanal oder die Frequenz (KANAL) der Sendung eines gewünschten Programms beziehen, wobei:
- normalerweise alle Daten (TYP, STARTZEIT, DAUER, DATUM, PROGRAMM ID, KANAL) das vorliegende Programm beschreiben,
- wenn in einer kurzen Zeit - insbesondere in einigen Minuten - ein neues Programm auf dem laufenden Kanal oder der laufenden Frequenz gesendet wird, die Zustandsdaten (TYP) auf einen Wartezustand (WARTEN) gesetzt werden und die anderen Daten (STARTZEIT, DAUER, DATUM, PROGRAMM ID, KANAL) das neue Programm beschreiben,
- wenn in dem gegenwärtigen Programm eine Werbung für ein künftiges Programm gesendet wird, das auf diesem Kanal/Frequenz oder einem andern gesendet werden soll, die Zustandsdaten (TYP) auf einen Informationszustand (INFORMATIONEN) gesetzt werden und die anderen Daten (STARTZEIT, DAUER, DATUM, PROGRAMM ID, KANAL) das umworbene künftige Programm beschreiben,
- Speichermittel (25), die wenigstens einen Teil der Daten speichern können,
- eine zentrale Prozessoreinheit (29), die mit den Speichermitteln (25) und mit dem Daten-Extrahierer (22) verbunden ist und die Daten auswertet und ein Aufzeichnungsgerät (21) steuert, das einen Tuner (20) enthält, wobei die Aufzeichnung ermöglicht wird, wenn sich der Zustand von dem Wartezustand (WARTEN) auf einen Sendezustand (SENDEN) ändert und wenn die Identitätsdaten (PROGRAMM ID) mit den jeweiligen Identitätsdaten übereinstimmen, die vorher in den Speichermitteln (25) gespeichert wurden,
- einen Infrarot-Empfänger (23), der mit der zentralen Prozessoreinheit (29) verbunden ist und einen Programmierbefehl des Benutzers von einer Infrarot- Fernbedieneinheit (18) dekodiert und dadurch den Betrieb der zentralen Prozessoreinheit auslöst.

## Revendications

1. Méthode de programmation d'un dispositif d'enregistrement (17), où des données correspondant à l'état (TYPE), à l'heure (START TIME, DURATION), à la date (DATE), à l'identité (PROGRAM ID) et au canal ou à la fréquence (CHANNEL) de diffusion de l'émission souhaitée sont transmises (14) en même temps que l'émission actuelle et où :
- normalement, toutes lesdites données (TYPE, START TIME, DURATION, DATE, PROGRAM ID, CHANNEL) décrivent ladite émission actuelle,
- si dans un laps de temps court - en particulier quelques minutes - une nouvelle émission est diffusée sur le canal ou la fréquence actuelle, ladite donnée d'état (TYPE) passe à l'état attente (WAIT) et lesdites autres données (START TIME, DURATION, DATE, PROGRAM ID, CHANNEL) décrivent ladite nouvelle émission,
- si au cours de l'émission actuelle est diffusée une annonce d'une émission future qui sera diffusée sur ce canal ou cette fréquence ou sur un canal ou une fréquence différents, ladite donnée d'état (TYPE) passe à l'état information (INFORMATION) et lesdites autres données (START TIME, DURATION, DATE, PROGRAM ID, CHANNEL) décrivent ladite émission future annoncée,
et où, lorsque l'utilisateur indique qu'il souhaite enregistrer ledit nouveau ou futur programme souhaité, lesdites données (TYPE, START TIME, DURATION, DATE, PROGRAM ID, CHANNEL) sont extraites (22) de ladite émission actuelle, sauvegardées (25) et utilisées pour la programmation automatique dudit dispositif d'enregistrement, où, avant l'heure du début (en général quelques minutes) de la diffusion de ladite émission souhaitée à ladite date, ledit dispositif d'enregistrement est programmé sur le canal ou la fréquence correspondante, le cas échéant, et ledit dispositif d'enregistrement attend une modification dudit état de l'état attente (WAIT) à l'état diffusion (BROADCAST), puis commence l'enregistrement, si ladite donnée d'identité (PROGRAM ID) coïncide avec la donnée d'identité correspondante sauvegardée.

2. Méthode selon la revendication 1, **où**, si lors de ladite émission en cours, certaines annonces qui ne sont pas en rapport avec une émission souhaitée sont diffusées, ladite donnée d'état (TYPE) est positionnée sur l'état pause (PAUSE) et les autres données (START TIME, DURATION, DATE, PROGRAM ID, CHANNEL) décrivent l'émission en cours interrompue temporairement, où l'enregistrement (17) est interrompu jusqu'à ce que ladite donnée d'état (TYPE) soit de nouveau positionnée à l'état diffusion (BROADCAST).

3. Méthode selon les revendications 1 ou 2, **où** ledit utilisateur indique la commande d'enregistrement en appuyant sur un bouton correspondant de la télécommande (18) qui contrôle à la fois le dispositif (16) qui reçoit l'émission en cours et le dispositif d'enregistrement (17).

4. Méthode selon la revendication 3, **où** un extracteur de données (22) permettant d'extraire l'ensemble desdites données (TYPE, START TIME, DURATION, DATE, PROGRAM ID, CHANNEL) est situé dans ledit dispositif d'enregistrement (17) et où ledit dispositif de réception (16) et ledit dispositif d'enregistrement (17) sont raccordés par un bus numérique sur lequel le signal reçu qui contient toutes lesdites données est transféré au dit dispositif d'enregistrement où elles sont évaluées (29).

5. Méthode selon la revendication 3, **où** un extracteur de données (22) permettant d'extraire l'ensemble desdites données (TYPE, START TIME, DURATION, DATE, PROGRAM ID, CHANNEL) est situé dans ledit dispositif de réception (16) et où ledit dispositif de réception (16) et ledit dispositif d'enregistrement (17) sont raccordés par un bus numérique sur lequel les données extraites sont transférées au dit dispositif d'enregistrement où elles sont évaluées (29).

6. Méthode selon la revendication 3, **où** ladite télécommande (18) stocke le numéro interne de sauvegarde du programme actuellement sélectionné dans ledit dispositif de réception (16), où un extracteur de données (22) permettant d'extraire toutes lesdites données (TYPE, START TIME, DURATION, DATE, PROGRAM ID, CHANNEL) est situé dans ledit dispositif d'enregistrement (17) et où sont stockés dans ce dispositif les canaux ou fréquences correspondant aux numéros de sauvegarde des programmes présélectionnés dans ledit dispositif de réception, le code infrarouge qui contient ledit numéro de sauvegarde du programme actuellement sélectionné étant évalué (23) dans le dispositif d'enregistrement et utilisé pour le réglage sur ce programme dans le dispositif d'enregistrement lorsque l'utilisateur appuie sur ledit bouton de ladite télécommande (18).

7. Méthode selon l'une des revendications 1 à 6, **où** lesdites données comportent également une donnée de périodicité (PERIODICITY) qui est utilisée pour la programmation dudit dispositif d'enregistrement (17) selon la séquence respective des émissions souhaitées.

8. Méthode selon l'une des revendications 1 à 7, **où** lesdites données contiennent également une données de titre (NAME) qui est utilisée pour afficher le titre de l'enregistrement sur ledit dispositif d'enregistrement (17) et/ou sur ledit dispositif de réception (16) et/ou sur ladite télécommande et/ou pour stocker ladite donnée de titre sur le média d'enregistrement.

9. Méthode selon l'une des revendications 1 à 8, **où** l'ensemble desdites données (TYPE, START TIME, DURATION, DATE, PROGRAM ID, CHANNEL) sont diffusées sur un canal de Barker séparé et, le cas échéant, sont extraites à partir de ce canal.

10. Dispositif de programmation pour la programmation d'un dispositif d'enregistrement (17), comportant :
- un extracteur de données (22) qui extrait du signal vidéo et/ou audio actuel des données qui correspondent à l'état (TYPE), à l'heure (START TIME, DURATION), à la date (DATE), à l'identité (PROGRAM ID) et au canal ou à la fréquence (CHANNEL) de diffusion de l'émission souhaitée, où :
- normalement, toutes lesdites données (TYPE, START TIME, DURATION, DATE, PROGRAM ID, CHANNEL) décrivent ladite émission actuelle,
- si dans un laps de temps court - en particulier quelques minutes - une nouvelle émission est diffusée sur le canal ou la fréquence actuelle, ladite donnée d'état (TYPE) passe à l'état attente (WAIT) et lesdites autres données (START TIME, DURATION, DATE, PROGRAM ID, CHANNEL) décrivent ladite nouvelle émission,
- si au cours de l'émission actuelle est diffusée une annonce d'une émission future qui sera diffusée sur ce canal ou cette fréquence ou sur un canal ou une fréquence différents, ladite donnée d'état (TYPE) passe à l'état information (INFORMATION) et lesdites autres données (START TIME, DURATION, DATE, PROGRAM ID, CHANNEL) décrivent ladite émission future annoncée,
- un dispositif de mémoire (25) qui peut stocker au moins une partie desdites données,
- une unité de traitement (29), qui est raccordée au dit dispositif de mémoire (25) et au dit dispositif d'extraction de données (22), évalue lesdites données et commande un dispositif d'enregistrement (21) comportant un tuner (20), ledit enregistrement étant autorisé lorsque ledit état passe de l'état attente (WAIT) à l'état diffusion (BROADCAST), si ladite donnée d'identité (PROGRAM ID) coïncide avec la donnée d'identité correspondante stockée auparavant dans ledit dispositif de mémoire (25),
- un récepteur infrarouge (23) qui est raccordé à ladite unité de traitement (29) et qui reçoit et décode la commande de programmation de l'utilisateur en provenance de la télécommande infrarouge (18), ce qui permet d'initialiser le fonctionnement de ladite unité de traitement.
